# EUROPÄISCHE PATENTSCHRIFT

(11) **EP 0 581 854 B1**
(45) Veröffentlichungstag und Bekanntmachung des Hinweises auf die Patenterteilung: **22.11.1995**
(21) Anmeldenummer: 92910735.7
(22) Anmeldetag: 28.05.1992
(51) Int. Cl.: A62D 3/00, B09B 3/00, C05D 3/02, C05G 3/00, C05D 11/00

(54) **VERFAHREN FÜR DAS PARALYSIEREN VON SCHWERMETALLEN IM BODEN**
PROCESS FOR IMMOBILIZING HEAVY METALS IN THE SOIL
PROCEDE D'IMMOBILISATION DE METAUX LOURDS DANS LE SOL

(30) Priorität: 28.05.1991 CS 1590/91
(43) Veröffentlichungstag der Anmeldung: 09.02.1994
(73) Patentinhaber: Zenzinger, Willi Natursteinimport, D-96472 Rödental (DE)
(72) Erfinder: KRCMA, Ladislav, 787 01 Sumperk (CS); POPRACH, Radomil, 789 71 Lestina (CS)
(74) Vertreter: Hansen, Bernd, Dr. Dipl.-Chem.
(86) Internationale Anmeldenummer: CS9200016
(87) Internationale Veröffentlichungsnummer: WO9221409

(56) Entgegenhaltungen:
- DE-A- 3 517 645
- US-A- 3 837 872
- SOVIET PATENTS ABSTRACTS Section Ch, Week 9124, 31. Juli 1991 Derwent Publications Ltd., London, GB; Class C, Page 2, AN 91-176780/24
- JAPANESE PATENTS GAZETTE Section Ch, Week A35, 11. Oktober 1978 Derwent Publications Ltd., London, GB; Class C, Page 7, AN 62811A/35
- CHEMICAL PATENTS INDEX, BASIC ABSTRACTS JOURNAL Section Ch, Week 8927, 30. August 1989 Derwent Publications Ltd., London, GB; Class C, AN 89-195555/27
- CHEMICAL PATENTS INDEX, BASIC ABSTRACTS JOURNAL Section Ch, Week D16, 10. Juni 1981 Derwent Publications Ltd., London, GB; Class C, AN 27981D/16
- CHEMICAL ABSTRACTS, vol. 105, no. 7, 18. August 1986, Columbus, Ohio, US; abstract no. 55974N, H.O.LEH: 'Possibilities to reduce the availability of heavy metals for plants growing in contaminated soils' Seite 197

## Beschreibung

### Bereich der Technik

Die Erfindung betrifft ein Verfahren zum Paralysieren des unerwünschten Einflusses von Schwermetallen im Boden, um dem Eindringen der Schwermetalle in die Nahrungskette vorzubeugen.

### Stand der Technik

Die Schwermetalle, die mit den handelsüblichen Düngemitteln oder durch Immisionen in Böden eindringen, sind mit Hilfe des Ionenaustausches oder der Komplexbindungen leicht adsorbierbar. Beispielsweise fängt bei der Trinkwasseraufbereitung 1 Kilogramm von Kalziumkarbonat mehrere Hundert Miligramm gefährlichen Schwermetalle ein. Der Boden weist ein bedeutendes Sorptionsvermögen von Schwermetallen zu binden auf, jedoch bei ihrer Anhäufung fallen dann die Erträge bedeutend ab. Infolge der Steigerung des pH-Wertes werden die Schwermetalle leicht freigesetzt und dringen unbehindert in die Nahrungskette ein. Deshalb wird auch die Bodenalkalität mit Hilfe vom gemahlenen Kalkstein oder Pulverkalkgemisch in erwünschter Weise angepasst. Der Pulverkalkstein enthält bis 80 %, sogar manchmal bis 98,5 % Kalziumkarbonat in reiner Form.
Als ein Nachteil der üblich angewendeten Bodenkalkung kann die Tatsache angesehen werden, daß die Schwermetalle, insbesondere das Kadmium im bestimmten Sauerbereich leicht löslich werden.

Es ist zwar bekannt, die Schadstoffe; insbesondere die Schwermetalle, in Deponien durch Verwendung von Metallsilikaten zu immobilisieren, sodaß sie in eine wasserunlösliche Form übergehen und die Abfallwasserströme nicht vergiften. Das Paralysieren des Einflusses der Schwermetalle kann auch, wie schon erwähnt, durch Erhöhung des pH-Wertes geschehen.Alle diese Methoden können jedoch nicht direkt zum Vorbeugen von Eindringen der Schwermetalle aus dem Boden in die wachsenden Pflanzen und dadurch zum Vorbeugen von Eindringen in die menschliche und tierliche Nahrungskette verwendet werden, da die Metallsilikate wegen seiner Form nicht direkt in den Boden eingebracht werden können.

### Wesen der Erfindung

Die Aufgabe der vorliegenden Erfindung ist, die zum Immobilisieren von Schwermetallen an sich bekannte Methode auch zum Paralysieren des unerwünschten Einflusses der Schwermetalle direkt im Boden durch Verwendung von wasserlöslichen Metallsilikate zusammen mit der Kalkung durch Pulverkalkstein oder ein Gemisch vom gebrannten Pulverkalk auszunützen, wonach die Silikate dann im Boden im Wasser, in organischen und auch anorganischen Säuren vollkommen unlöslich werden. Es kann dazu das Kaliumsilikat, das bei der Umwandlung von löslicher Form der Schwermetalle in eine wasserunlösliche Form von Schwermetallsilikaten das für den Boden notwendige Kalium freisetzt, vorteilhaft eingesetzt werden. Die erfinderische Aufgabe wird dadurch gelöst, daß ein wasserlösliches alkalisches Silikat oder ein Gemisch von alkalischen Silikaten zum Kalkstein bei oder nach dem Mahlen zugesetzt und dieses Gemisch dann zur Düngung des Bodens verwendet wird.

Die Bedeutung der angewendeten wasserlöslichen alkalischen Silikate liegt darin, daß die Silikatanionen, die unlösliche Schwermetallverbindungen bilden, zuerst in einer wasserlöslichen Ionenform vorhanden sind. Diese Anionen weisen eine sehr große Reaktivität zu den Schwermetallen auf. Die Reaktionen verlaufen vorzugsweise mit den Kationen, die größere Atomgewichte besitzen. Die Einführung der Metallsilikate in den Boden zusammen mit der Kalkung ermöglicht also die Einnahme der wasserlöslichen Silikate durch den Boden und eine anschließende Umwandlung der nicht erwünschten wasserlöslichen Schwermetalle in eine wasserunlösliche Form direkt im Boden, was bisher nicht bekannt und auch nicht ohne Kalkung praktisch verwendbar wurde.

### Ausführungsmethoden des erfindungsmäßigen Verfahrens

### Beispiel 1.

Der Kalkstein wird mit wasserlöslichem Kaliumsilikat in einem Verhältnis von
1000 Gewichtsteilen Kalkstein und
6 Gewichtsteilen Kaliumsilikat (Kaliumwasserglas), die eine Dichte von 1300 bis 1400 kg.m⁻³ besitzt, angefeuchtet.
Dann erfolgt das Mahlen in einer Kugelmühle oder einer ähnlichen Einrichtung. Nach dem Erreichen der benötigten Feinheit wird das Produkt zum Düngen des Bodens angewendet.

### Beispiel 2.

Der Kalkstein wird vor dem Mahlen mit wasserlöslichem Natriumsilikat (Natriumwasserglas) im gleichen Verhältnis wie im Beispiel 1 angefeuchtet.

### Beispiel 3.

Der Kalkstein wird mit einem Gemisch von alkalischem Kalium- und Natriumsilikat in einem Verhältnis von 1 : 1 angefeuchtet. Weiter verfährt man wie im Beispiel 1.

### Beispiel 4.

Zum feingemahlenen Kalkstein wird das alkalische Pulver- oder Natriumsilikat im folgenden Verhältnis zugestetzt:
1000 Gewichtsteile des feingemahlenen Kalksteins
2,5 Gewichtsteile von Pulver- oder Natriumsilikat, bzw. ihr Gemisch.

### Beispiel 5.

Zu einem Gemisch von gemahlenem Kalkstein mit einem alkalischen wasserlöslichen Silikat wird gebrannter Pulverkalk im folgenden Verhältnis zugesetzt:
1000 Gewichtsteile von feingemahlenem Kalkstein mit wasserlöslichem Silikat nach vorhergehenden Beispielen
200 Gewichtsteile vom gebrannten Pulverkalk.

Zur Entstehung von waserunlöslichen Schwermetallsilikaten kommt es in allen angeführten Fällen infolge der Bodenfeuchtigkeit. Die Menge von zum Kalkstein zugesetzten alkalischen Silikaten kann sich nach der Stufe der Verunreinigung des Bodens durch Schwermetalle richten.

## Patentansprüche

1. Verfahren zum Paralysieren des unerwünschten Einflusses von Schwermetallen im Boden mit Hilfe von alkalischen Silikaten, dadurch gekennzeichnet, daß ein wasserlösliches alkalisches Silikat oder ein Gemisch von alkalischen Silikaten zum Kalkstein bei oder nach dem Mahlen zugesetzt und dieses Gemisch dann zur Düngung des Bodens verwendet wird.

2. Verfahren nach Anspruch 1, dadurch gekennzeichnet, daß dem gemahlenen Kalkstein Kalziumoxid zugesetzt wird.

## Claims

1. Method for inhibiting the undesired effect of heavy metals in the soil with the aid of alkaline silicates, characterised in that a water-soluble alkaline silicate or a mixture of alkaline silicates is added to the limestone during or after grinding and this mixture is then used for fertilising the soil.

2. Method according to claim 1, characterised in that calcium oxide is added to the ground limestone.

## Revendications

1. Procédé de blocage de l'influence indésirable de métaux lourds dans le sol, à l'aide de silicates alcalins, caractérisé en ce qu'un silicate alcalin soluble dans l'eau ou un mélange de silicates alcalins et de pierre à chaux est ajouté lors du ou après le broyage, et ce mélange étant ensuite utilisé comme engraissement du sol.

2. Procédé selon la revendication 1, caractérisé en ce que de l'oxyde de calcium est ajouté à la pierre à chaux.
